# EUROPEAN PATENT SPECIFICATION

(11) **EP 2 653 332 B1**
(45) Date of publication and mention of the grant of the patent: **13.01.2016**
(21) Application number: 13162970.1
(22) Date of filing: 09.04.2013
(51) Int. Cl.: B60J 5/04, B60J 5/10

(54) **Resin vehicle door structure**
Harzstruktur für eine Fahrzeugtür
Structure de porte de véhicule en résine

(30) Priority: 18.04.2012 JP 2012094989
(43) Date of publication of application: 23.10.2013
(73) Proprietor: TOYOTA JIDOSHA KABUSHIKI KAISHA, Toyota-shi, Aichi-ken, 471-8571 (JP)
(72) Inventor: Hamasaki, Hitoshi, Toyota-shi, Aichi-ken, 471-8571 (JP); Akimoto, Kazuya, Kanagawa, 237-8585 (JP); Demizu, Hiroaki, Kanagawa, 237-8585 (JP)
(74) Representative: Kuhnen & Wacker

(56) References cited:
- EP-A1- 0 881 111
- EP-A2- 0 257 608
- JP-A- 2011 136 606

## Description

### BACKGROUND

### Technical Field

The present invention relates to a resin vehicle door structure according to the preamble of claim 1.

### Related Art

Japanese Patent Application Laid-Open No. JP 2011-136606 A discloses a resin back door structure wherein a resin inner panel and outer panel are adhered together using an adhesive such as a urethane.

In the resin back door structure of JP 2011-136606 A, it is difficult to position the outer panel and the inner panel against each other during adhesion employing an adhesive.

In order to position the inner panel and the outer panel with respect to each other, in some cases for example two jigs are employed to which the inner panel and the outer panel are respectively fixed. In such cases, positioning precision is achieved by for example pins that project out from a first of the jigs being inserted into holes provided in the other jig.

However, when thus employing two jigs, variation is present between the panels and the jigs and between the two jigs respectively, with the cumulative variation causing a large misalignment between the relative positions of the inner panel and the outer panel. Misalignment between the relative positions of the inner panel and the outer panel is manifested as a variable gap at the join line between the back door and a body, resulting in an unsightly appearance.

Another vehicle door construction is disclosed by EP 0 257 608 A2. This vehicle door construction contains an inner door panel and an outer door panel with a skeleton juxtaposed by the inner and outer door panels and mounted with interior door parts. The vehicle door construction is assembled with the vehicle body by mounting the interior door parts on the skeleton and then mounting the inner door panel on the skeleton.

A further door structure that has a support plate, to which various accessories are preassembled, and which is then fitted to the rear door, from the internal side of the panel forming the body of the door is, finally, disclosed by EP 0 881 111 A1. The support plate carries all the mechanisms, wiring and controls for the various accessories, which are required on the back door.

### SUMMARY

In consideration of the above circumstances, the present invention has as its object to provide a resin vehicle door structure capable of raising positioning precision between an inner panel and an outer panel and to expel water that has penetrated into a gap between the inner panel and the outer panel to the outside. This object is solved by the vehicle door structure of claim 1 with further features being defined by the sub-claims.

A resin vehicle door structure according to the present invention includes: an outer panel that is disposed to a vehicle compartment outer side of a vehicle door; an inner panel that is made from resin, disposed to a vehicle compartment inner side of the outer panel, and joined to the outer panel by an adhesive; a protrusion portion that is provided to the inner panel and protrudes towards the vehicle compartment outer side; and a hole portion that is provided to the outer panel and that positions the outer panel in a vehicle door width direction with respect to the inner panel by interlocking with the protrusion portion. The hole portion is an elongated hole formed longer along a vehicle up-down direction; and a gap is formed between the hole portion and the protrusion portion at least at an up-down direction lower side of the protrusion portion, in an interlocked state of the hole portion and the protrusion portion

According to the resin vehicle door structure of the present invention, the inner panel is provided with the protrusion portion that protrudes towards the vehicle compartment outer side. The hole portion provided to the outer panel interlocks with the protrusion portion of the inner panel, thereby positioning the outer panel in the vehicle door width direction with respect to the inner panel. In this state, the resin inner panel is joined to the outer panel using the adhesive. Namely, the vehicle width direction positioning precision between the inner panel and the outer panel can be raised by directly interlocking the protrusion portion of the inner panel with the hole portion of the outer panel.

According to the present invention, the hole portion of the outer panel is configured as an elongated hole formed longer along the vehicle up-down direction, with the gap formed between the hole portion and the protrusion portion at least at an up-down direction lower side of the protrusion portion, in interlocked state of the hole portion and the protrusion portion. Water that has penetrated into a gap between the inner panel and the outer panel can accordingly be expelled to the outside of the outer panel through the gap between the hole portion and the protrusion portion that is present at least at the up-down direction lower side of the protrusion portion.

An embodiment of the resin vehicle door structure of the present invention further includes a bracket that is attached to the inner panel between the inner panel and the outer panel, wherein the bracket includes: a nut that retains a license plate; and an attachment hole that attaches a lamp illuminating the license plate.

According to the mentioned embodiment of the present invention, the bracket is attached to the inner panel between the inner panel and the outer panel. The bracket is provided with the nut and the lamp attachment hole. The license plate is retained using the nut of the bracket, and the lamp that illuminates the license plate is attached to the attachment hole of the bracket. Misalignment between the relative positions of the license plate and the lamp with respect to the inner panel can accordingly be reduced.

A further embodiment of the resin vehicle door structure of the present invention further includes: an engaged-with portion that is provided to the inner panel; and an engagement portion that is provided to the bracket and that engages with and is positioned by the engaged-with portion wherein the engagement portion positions the bracket in a vehicle width direction and a vehicle up-down direction with respect to the inner panel by engagement with the engaged-with portion.

According to the mentioned further embodiment of the present invention, the engaged-with portion is provided to the inner panel, and the engagement portion provided to the bracket engages with the engaged-with portion of the inner panel to position the bracket with respect to the inner panel. The positioning precisions of the inner panel against the bracket in the vehicle up-down direction and in vehicle width direction can accordingly be raised, and misalignment in the relative positions of the license plate and the lamp with respect to the inner panel can be further reduced.

In another embodiment of the resin vehicle door structure of the present invention, the protrusion portion and the hole portion are positioned at a lower side of the door, at a lowermost portion of an upper side of a seal line where the outer panel and the inner panel are joined together by the adhesive.

According to the last embodiment of the present invention, the protrusion portion of the inner panel and the hole portion of the outer panel are positioned at the lowermost portion of the upper side of the seal line where the outer panel and the inner panel are joined together by the adhesive. Water that has penetrated to the gap between the inner panel and the outer panel accordingly flows towards the vehicle lower side, and the water can be expelled to the outside through the gap between the hole portion and the protrusion portion positioned at the lowermost portion of the upper side of the seal line.

### BRIEF DESCRIPTION OF THE DRAWINGS

Exemplary Embodiments of the present invention will be described in detail based on the following figures, wherein:
Fig. 1 is a back perspective view illustrating a resin back door applied with a resin vehicle door structure according to an exemplary embodiment;
Fig. 2 is a perspective view illustrating adhesive coating portions of an inner panel to which an upper outer and a lower outer illustrated in Fig. 1 are joined;
Fig. 3 is a cross-section of a resin back door taken along line 2-2 in Fig. 1, showing a state in which the resin back door is supported on a main body;
Fig. 4 is a perspective view illustrating the vicinity of a license plate attached to a lower outer;
Fig. 5 is a cross-section of a resin back door taken along line 3-3 in Fig. 1;
Fig. 6 is a back face view illustrating the vicinity of a lower side central portion of an inner panel of the resin back door illustrated in Fig. 1, with a portion of the outer lower cut away;
Fig. 7 is a back face view illustrating a bracket shown in Fig. 5;
Fig. 8 is a cross-section of a bracket taken along line 7-7 in Fig. 7;
Fig. 9 is a cross-section of an inner panel and an outer panel taken along line 5-5 in Fig. 6;
Fig. 10 is a cross-section of an inner panel and a bracket taken along line 6-6 in Fig. 6;
Fig. 11 is a cross-section of a resin back door taken along line 4-4 in Fig. 1;
Fig. 12 is a perspective view illustrating two jigs for positioning an inner panel, an upper outer and a lower outer in a resin back door of a comparative example;
Fig. 13 is a back face view illustrating the vicinity of a license plate attached to a lower outer in a resin back door of a comparative example; and
Fig. 14 is a cross-section illustrating an inner panel and a lower outer in the vicinity of a license plate and a lamp in a resin back door of a comparative example.

### DETAILED DESCRIPTION

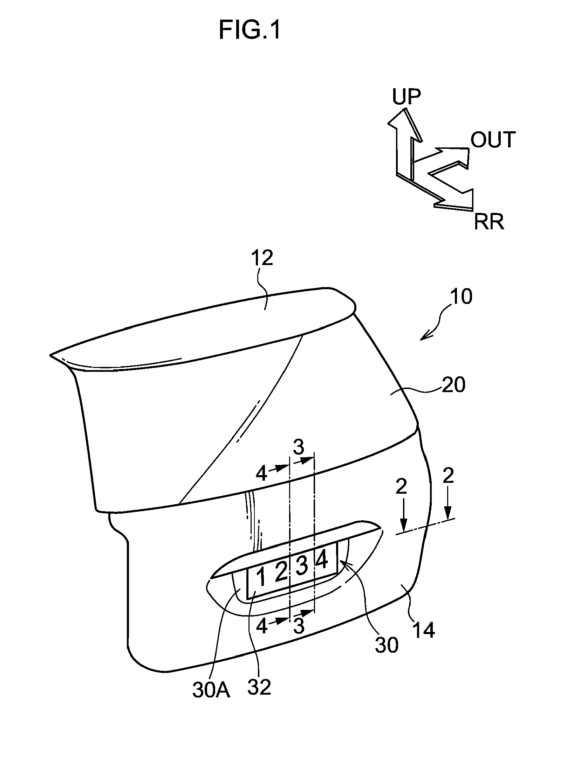

Explanation follows regarding an exemplary embodiment of a resin vehicle door structure according to the present invention, with reference to Fig. 1 to Fig. 11. Note that in the drawings, the arrow RR indicates the vehicle rear side, the arrow UP indicates the vehicle upper side, and the arrow OUT indicates the vehicle width direction outside, as appropriate. Arrow FR indicates the vehicle front side.

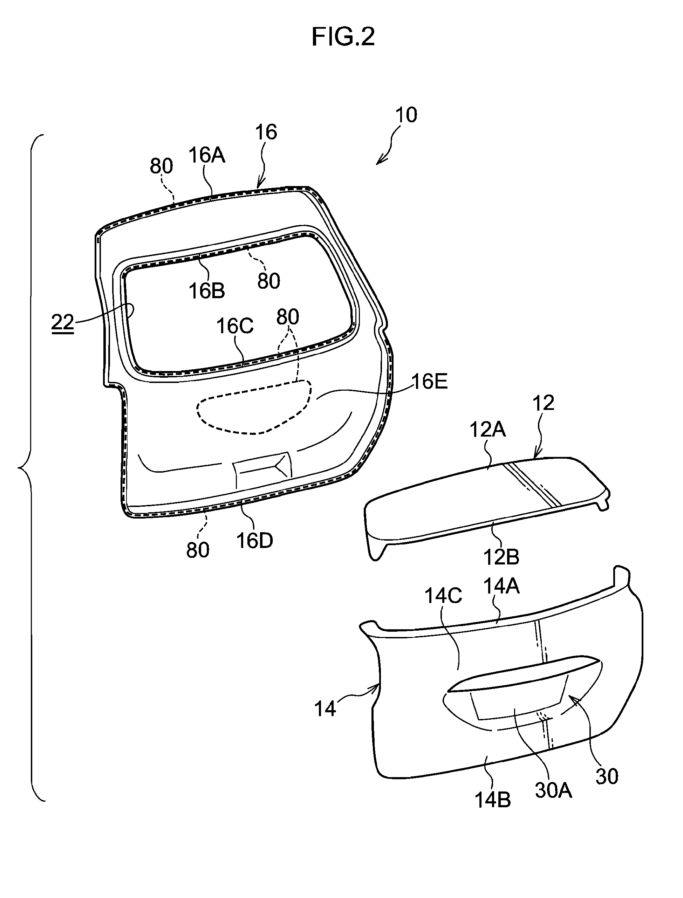

Fig. 1 shows a back door 10 applied with a resin vehicle back door structure as an example of a resin vehicle door structure. Fig. 2 is a perspective view of an upper outer and lower outer serving as an outer panel, and an inner panel that are employed in the back door 10. Although not shown in the drawings, a substantially rectangular back door opening is provided to a rear end section of a vehicle body, and the back door opening is opened and closed by the back door 10 illustrated in Fig. 1. An upper end portion of the back door 10 is supported on hinges (not shown in the drawings) at the vehicle body rear end section, such that the back door 10 can be opened and closed.

As shown in Fig. 1 and Fig. 2, the back door 10 includes an upper outer 12 as an example of an outer panel disposed at an upper portion side to the outside of the vehicle compartment, a lower outer 14 as an example of an outer panel disposed at a lower portion side to the outside of the vehicle compartment, and an inner panel 16 that is made from resin and is disposed at the vehicle compartment inner side of the upper outer 12 and the lower outer 14. In other words, the upper outer 12 is disposed at the vehicle front-rear direction rear side of an upper portion side of the inner panel 16, and the lower outer 14 is disposed at the vehicle front-rear direction rear side of a lower portion side of the inner panel 16. In the present exemplary embodiment, the upper outer 12 and the lower outer 14 are formed from resin panels.

As shown in Fig. 2, an opening portion 22 is provided to the upper portion side of the inner panel 16. A rear window glass 20 (see Fig. 1) is attached to the back door 10 so as to cover the opening portion 22.

As shown in Fig. 1, a recessed portion 30 indented towards the vehicle front side is provided at a vehicle width direction central portion of the lower outer 14. The back face of the recessed portion 30 configures a flat face portion 30A formed in a substantially flat plane shape. A license plate 32 is attached to the flat face portion 30A.

As shown in Fig. 2, join portions between the inner panel 16 and the upper outer 12 and join portions between the inner panel 16 and the lower outer 14 are joined by an adhesive 80 such as a polyurethane. More specifically, the adhesive 80 is coated along an upper end peripheral edge portion 16A of the inner panel 16, and the adhesive 80 is also coated along an upper edge portion 16B of the opening portion 22 of the inner panel 16. In this state, an upper end peripheral edge portion 12A and a lower end peripheral edge portion 12B of the upper outer 12 are respectively joined by the adhesive 80 to the upper end peripheral edge portion 16A of the inner panel 16 and the upper edge portion 16B of the opening portion 22 of the inner panel 16 by relatively pressing the upper outer 12 and the inner panel 16 against each other.

The adhesive 80 is also coated along a lower edge portion 16C of the opening portion 22 of the inner panel 16, coated along a lower side peripheral edge portion 16D of the inner panel 16, and coated in a loop pattern at a lower side central portion 16E of the inner panel 16. In this state, an upper end portion 14A, a lower side peripheral edge portion 14B and a central portion 14C of the lower outer 14 are respectively joined by the adhesive 80 to the lower edge portion 16C of the opening portion 22 of the inner panel 16, and the lower side peripheral edge portion 16D and the lower side central portion 16E of the inner panel 16 by relatively pressing the lower outer 14 and the inner panel 16 against each other.

In the present exemplary embodiment, the outer panel is configured from the two divided members of the upper outer 12 and the lower outer 14. However the outer panel may be configured from a single integrated panel, with an opening portion for attachment of the rear window glass formed to an upper portion side of the outer panel.

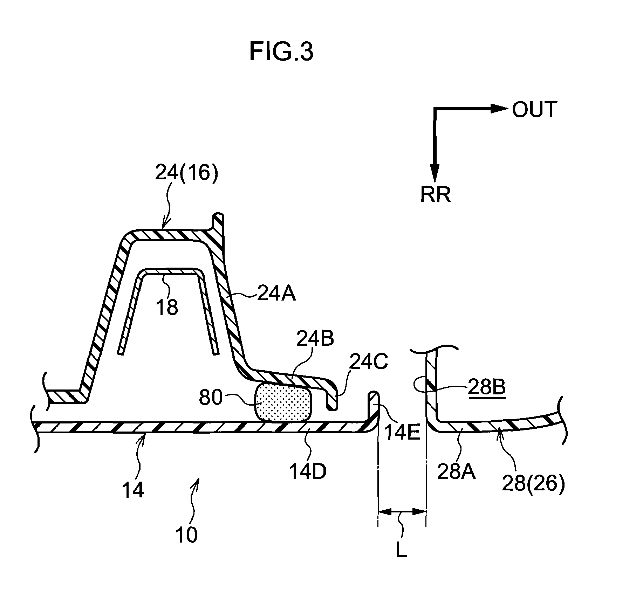

Fig. 3 is a cross-section taken along line 2-2 in Fig. 1 and showing a vehicle width direction outside end portion of the back door 10. As shown in Fig. 3, as viewed in a plan view cross-section taken along the vehicle width direction, a vehicle width direction outside end portion 24 of the inner panel 16 is formed in a substantially hat shape and is disposed such that a recess shaped portion 24A that is bent into a substantially U-shape is disposed opening towards the vehicle rear side. A flange portion 24B extending from a rear end portion of the recess shaped portion 24A substantially towards the vehicle width direction outside, and an bent portion 24C that is bent from a vehicle width direction outside end portion of the flange portion 24B towards the lower outer 14 side are formed at the vehicle width direction outside of the recess shaped portion 24A.

Reinforcement 18 of substantially U-shaped cross-section is disposed along the vehicle up-down direction inside the recess shaped portion 24A of the inner panel 16. In the present exemplary embodiment, the reinforcement 18 is formed from sheet steel. The reinforcement 18 is fixed to the inner panel 16 by fasteners, not shown in the drawings.

A vehicle width direction outside end portion 14D of the lower outer 14 extends further to the vehicle width direction outside than the flange portion 24B of the inner panel 16, and a bent portion 14E that is bent towards the vehicle front side along the direction of the bent portion 24C is formed to the end portion 14D of the lower outer 14.

The inner panel 16 is for example formed from a resin such as polypropylene (PP), and the rear face of the flange portion 24B of the inner panel 16 and the front face of the end portion 14D of the lower outer 14 are joined by the adhesive 80.

In a closed state of the back door 10 that is supported on a main body 26, a side outer member (side outer panel) 28 configuring a portion of the main body 26 is disposed at the vehicle width direction outside of the back door 10. A rear face portion 28A of the side outer member 28 is disposed substantially on an extension line of the rear face of the lower outer 14.

There is a need to raise positioning precision during adhesion of the lower outer 14 to the inner panel 16, since variation in a separation distance L between the bent portion 14E of the end portion 14D of the lower outer 14 and a back door opening 28B of the side outer member 28 and/or variation in the position of the lower outer 14 with respect to the rear face portion 28A of the side outer member 28 would cause gaps at joints and height differences, resulting in an unsightly appearance. Explanation is given later regarding positioning during adhesion of the lower outer 14 to the inner panel 16.

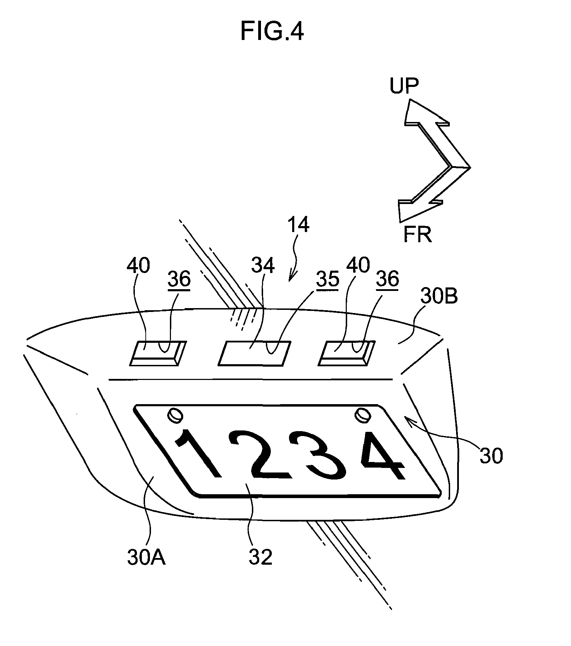

Fig. 4 is a perspective view illustrating the vicinity of a license plate 32 of the lower outer 14. As shown in Fig. 4, an upper wall portion 30B that projects out towards the vehicle rear side from an upper edge of the flat face portion 30A is provided at an upper portion of the recessed portion 30 of the lower outer 14. A rectangular opening portion 35 formed to a vehicle width direction central portion of the upper wall portion 30B is provided with a handle switch 34. Opening portions 36 are formed to both vehicle width direction sides of the handle switch 34 of the upper wall portion 30B so as to be disposed at positions corresponding to lamps 40, described later. The lamps 40 are configured so as to illuminate the license plate 32 at a specific light intensity through the opening portions 36 of the lower outer 14, for example during night-time travel.

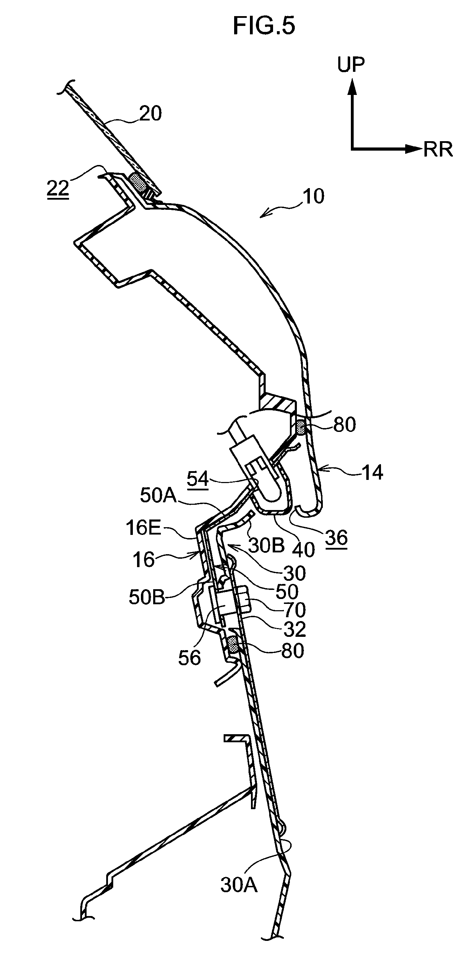

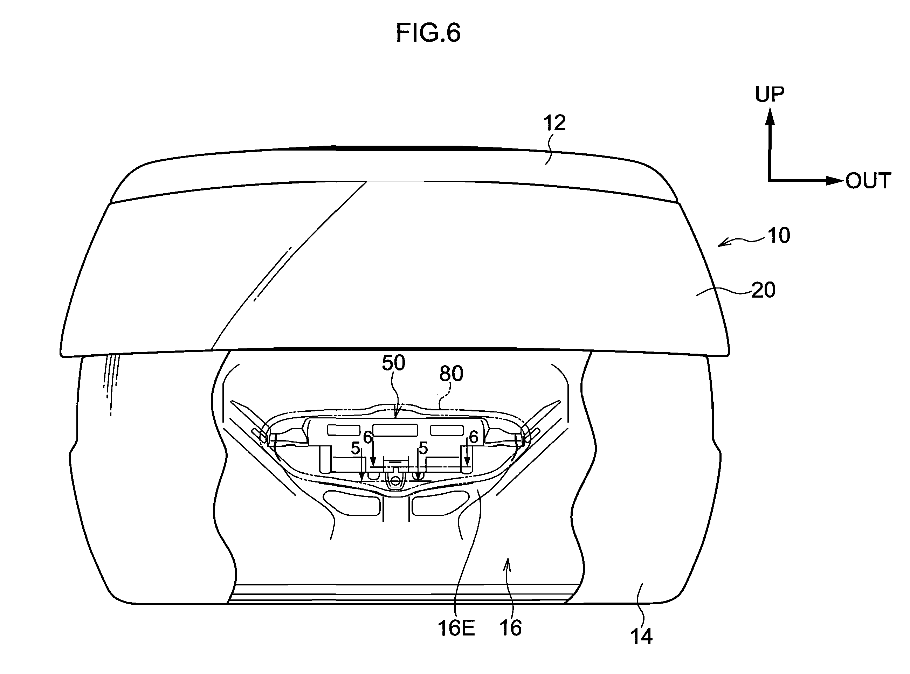

Fig. 5 is a cross-section taken along line 3-3 in Fig. 1 showing a resin back door. Fig. 6 is a back face view of the resin back door shown in Fig. 1, with a portion of the lower outer cut away to show the vicinity of a lower side central portion of the inner panel. As shown in Fig. 5 and Fig. 6, a metal bracket 50 is attached to the lower side central portion 16E of the inner panel 16, between the inner panel 16 and the lower outer 14.

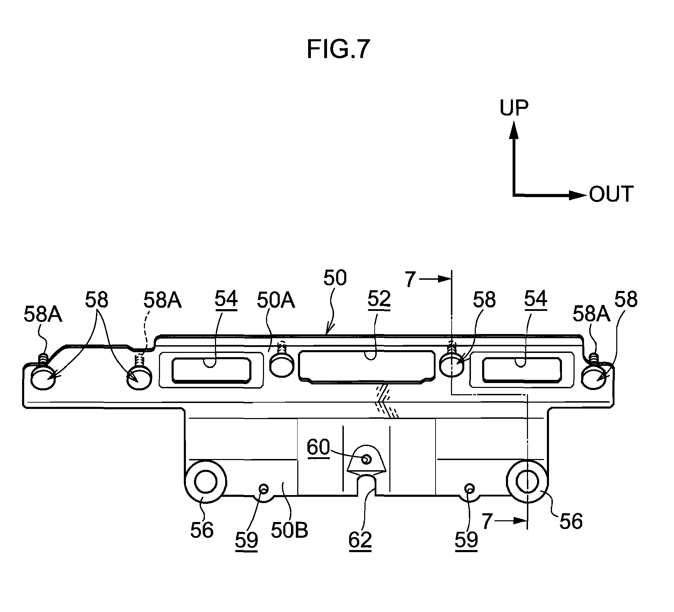

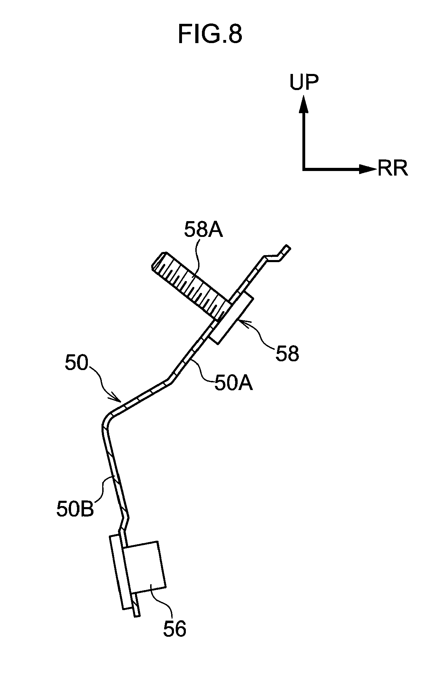

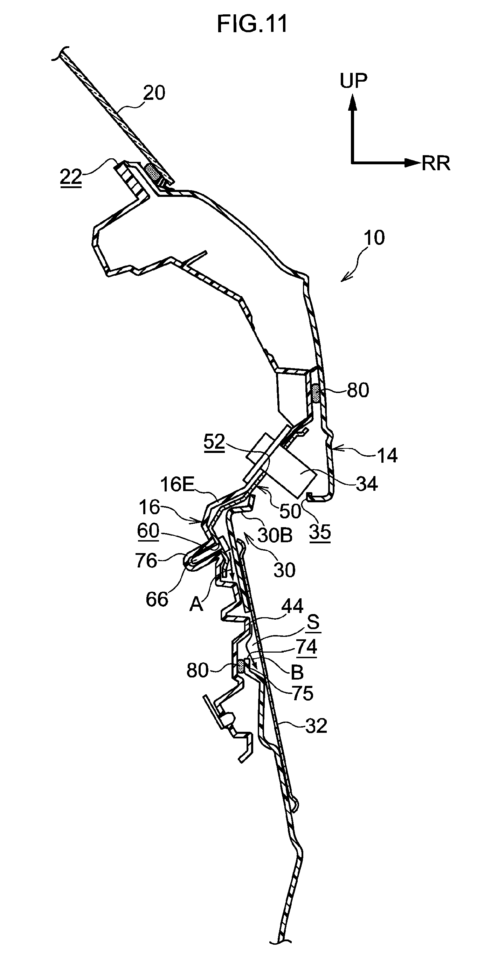

Fig. 7 is a back face view of the bracket 50. Fig. 8 is a cross-section of the bracket 50 taken along line 7-7 in Fig. 7. As shown in Fig. 5 and Fig. 8, the bracket 50 is configured from a sheet material bent at a vehicle up-down direction intermediate portion as viewed from the side of the vehicle into a substantially L-shape. An upper wall portion 50A and a lower wall portion 50B are respectively provided above and below the bent portion. As shown in Fig. 7, a handle attachment hole 52 to which the handle switch 34 (see Fig. 11) is attached is formed at a vehicle width direction central portion of the upper wall portion 50A of the bracket 50. Attachment holes 54 to which the lamps 40 (see Fig. 5) are attached are formed in the upper wall portion 50A of the bracket 50 to both vehicle width direction sides of the handle attachment hole 52.

Weld nuts 56 for attaching the license plate 32 are fixed for example by welding to the lower wall portion 50B of the bracket 50. Plural (five in the present exemplary embodiment) stud bolts 58 are fixed for example by welding to the upper wall portion 50A of the bracket 50. The stud bolts 58 are fixed to the upper wall portion 50A such that shaft portions 58A of the stud bolts 58 project out towards the vehicle front side. The stud bolts 58 are employed to attach the lamps 40 and to fasten and fix the bracket 50 to the inner panel 16.

A through hole 60 is formed to the lower wall portion 50B of the bracket 50 for fastening and fixing to the inner panel 16 with a fastener (a screw).

An opening portion 62 serving as an engagement portion is formed to a vehicle width direction central portion of the lower wall portion 50B of the bracket 50. The opening portion 62 is configured in a U-shape cut out from a lower edge of the lower wall portion 50B. The opening portion 62 of the bracket 50 positions the bracket 50 in the vehicle width direction and the vehicle up-down direction with respect to the inner panel 16 by engaging with a projection portion 46 that serves as an engaged-with portion formed to the inner panel 16.

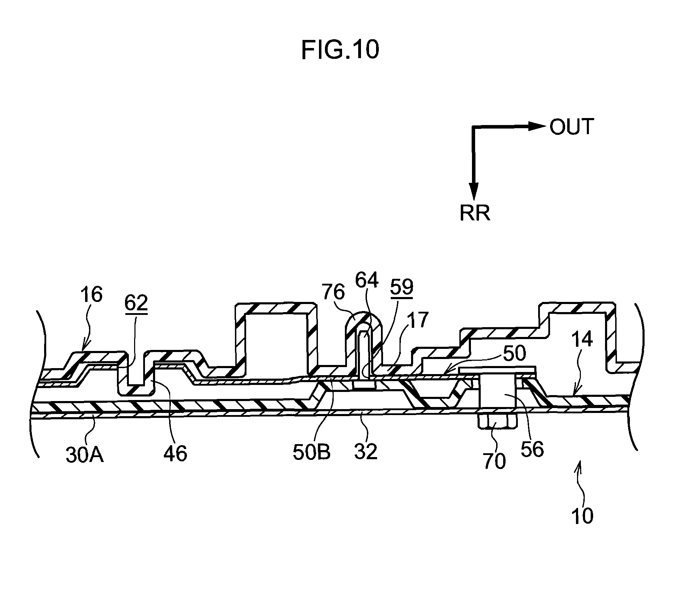

Fig. 10 is a cross-section taken along line 6-6 in Fig. 6 and illustrating a configuration in the vicinity of the inner panel 16 and the bracket 50. As shown in Fig. 10, the projection portion 46 that projects out towards the vehicle rear side (vehicle compartment outer side) is formed at a vehicle width direction central portion of the inner panel 16. The projection portion 46 is formed with a circular cylinder shaped cross-section taken along the vehicle width direction and the vehicle up-down direction, with the external diameter of the projection portion 46 formed slightly smaller than the internal diameter of the opening portion 62 of the bracket 50. A peripheral face of the projection portion 46 accordingly engages with (fits together with) the opening portion 62 of the bracket 50. The bracket 50 is positioned in the vehicle width direction and the vehicle up-down direction with respect to the inner panel 16 due to the opening portion 62 of the bracket 50 engaging with (fitting together with) the projection portion 46 of the inner panel 16 from the vehicle outside during attachment of the bracket 50 to the inner panel 16.

When the opening portion 62 of the bracket 50 has been engaged with (fitted together with) the projection portion 46 of the inner panel 16 from the vehicle outside, a substantially flat plane shaped general portion of the lower wall portion 50B of the bracket 50 and a substantially flat plane shaped general portion 17 at the lower side central portion 16E of the inner panel 16 are disposed in a face-to-face contact state with each other. The upper wall portion 50A of the bracket 50 is then fixed to the inner panel 16 in this state by screwing nuts onto the stud bolts 58 that are disposed at both vehicle width direction end portions of the upper wall portion 50A of the bracket 50 from the vehicle inside of the inner panel 16.

As shown in Fig. 11, a screw 66 serving as a fastener is passed through the through hole 60 in the lower wall portion 50B of the bracket 50 and tightened onto a fixing location 76 of the inner panel 16, thereby fixing the lower wall portion 50B of the bracket 50 to the inner panel 16.

As shown in Fig. 5 and Fig. 10, the vicinity of the vehicle width direction central portion of the lower outer 14 is disposed to the vehicle outside of the bracket 50. The license plate 32 is disposed against the flat face portion 30A of the lower outer 14 in a face-to-face contact state, and bolts 70 are screwed into the weld nuts 56 of the bracket 50 from the vehicle outside of the license plate 32. The license plate 32 is accordingly fastened and fixed to the bracket 50 with the lower outer 14 interposed between the license plate 32 and the bracket 50.

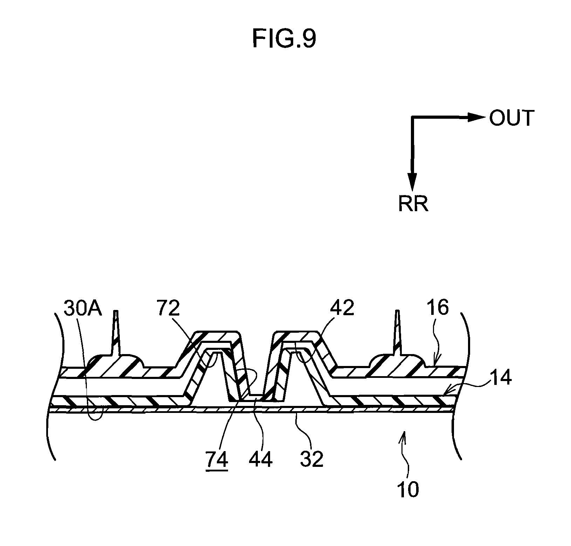

Fig. 9 is a cross-section taken along line 5-5 in Fig. 6 and illustrates a configuration at the vicinity of the lower outer 14 and the inner panel 16. As shown in Fig. 9, a recess shaped flat face portion 42 that is recessed towards the vehicle front side is formed to the inner panel 16 in the vicinity of the vehicle width direction central portion of the inner panel 16. A protrusion portion 44 that protrudes towards the vehicle rear side (vehicle compartment outer side) is formed to the recessed flat face portion 42. The protrusion portion 44 is formed with a substantially circular shaped cross-section taken along the vehicle width direction and the vehicle up-down direction, and is shaped so as to become narrower on progression towards a leading end. As shown in Fig. 5 and Fig. 11, the protrusion portion 44 of the inner panel 16 is formed in the vicinity of a lowermost portion of the adhesive 80 coated in a loop pattern at the vehicle width direction central portion of the inner panel 16.

A recessed portion 72 that is recessed towards the vehicle front side is formed in the vicinity of the vehicle width direction central portion of the lower outer 14. A hole portion 74 with which the protrusion portion 44 of the inner panel 16 interlocks is formed to the recessed portion 72 so as to project out towards the vehicle rear side. The hole portion 74 of the lower outer 14 is formed so as to correspond to the shape of the protrusion portion 44, with the inner diameter becoming smaller on progression towards the vehicle rear side. The vehicle width direction outer diameter of the protrusion portion 44 is formed slightly smaller than the vehicle width direction inner diameter of the hole portion 74 of the lower outer 14, such that a peripheral face of the protrusion portion 44 interlocks with (fits together with) the hole portion 74 of the lower outer 14. When the lower outer 14 and the inner panel 16 are being joined together by the adhesive 80, the adhesive 80 is pre-coated at specific positions on the inner panel 16 (see Fig. 2) before the hole portion 74 of the lower outer 14 is then interlocked with (fitted together with) the protrusion portion 44 of the inner panel 16 as shown in Fig. 9. The lower outer 14 is accordingly positioned in the vehicle width direction with respect to the inner panel 16. The lower outer 14 and the inner panel 16 are joined in this state by the adhesive 80.

As shown in Fig. 11, the hole portion 74 of the lower outer 14 is configured as an elongated hole that is longer in the vehicle up-down direction. Accordingly, as shown in Fig. 9, a gap S is formed running in the vehicle up-down direction between the protrusion portion 44 and the hole portion 74 in an interlocked state of the hole portion 74 of the lower outer 14 with the protrusion portion 44 of the inner panel 16. The gap S between the protrusion portion 44 and the hole portion 74 is larger on the lower side of the protrusion portion 44 than on the upper side of the protrusion portion 44. A lower edge portion 75 of the hole portion 74 of the lower outer 14 is joined to the inner panel 16 by the adhesive 80. The hole portion 74 of the lower outer 14 and the protrusion portion 44 of the inner panel 16 are provided in order to perform vehicle width direction positioning, and even though the gap S is present running in the up-down direction between the protrusion portion 44 and the hole portion 74 this does not cause an issue regarding positioning in the vehicle width direction.

As shown in Fig. 10, the separation distance between the adhered faces of the inner panel 16 and the lower outer 14 is maintained at a specific value by the screws 64 that pass through from the lower outer 14 side through holes 59 (see Fig. 7) in the bracket 50 and are fixed to fixing locations 76 of the inner panel 16.

As shown in Fig. 2 and Fig. 6, the lower outer 14 and the inner panel 16 are joined together and sealed by the adhesive 80 disposed in a loop pattern in the vicinity of the license plate 32 of the lower outer 14. Accordingly, even were water to penetrate through the opening portion 35 and the opening portions 36 of the lower outer 14 to between the lower outer 14 and the inner panel 16, the water would not drip inside the vehicle compartment to the vehicle inside of the inner panel 16. Any water that penetrates through the opening portion 35 and the opening portions 36 of the lower outer 14 to between the lower outer 14 and the inner panel 16 flows in the vehicle downwards direction indicated by arrow A (see Fig. 11), and is expelled to the vehicle exterior through the gap S (in particular the gap S at the lower side of the protrusion portion 44) running in the vehicle up-down direction between the protrusion portion 44 and the hole portion 74 as indicated by arrow B.

In the present exemplary embodiment, the adhesive 80 that joins together the lower outer 14 and the inner panel 16 is provided in a loop pattern, however there is no limitation thereto, and for example a configuration may be made discontinuous at a portion of the adhesive on the upper side. In such cases, due to any water that has penetrated through the opening portion 35 and the opening portions 36 of the lower outer 14 to between the lower outer 14 and the inner panel 16 flowing in the vehicle downwards direction, penetration of water to inside the vehicle compartment through the discontinuous portion at the top side of the adhesive is suppressed. However, it is preferable for the adhesive 80 to be in a closed loop pattern from the perspectives of blocking external air and blocking sound.

Explanation follows regarding the operation and advantageous effects of the present exemplary embodiment.

As shown in Fig. 9, the protrusion portion 44 is provided to the inner panel 16 and the hole portion 74 is provided to the lower outer 14 in order to perform vehicle width direction positioning between the inner panel 16 and the lower outer 14. When joining the lower outer 14 and the inner panel 16 together with the adhesive 80, the adhesive 80 is pre-coated to specific positions on the inner panel 16 (see Fig. 2) and the hole portion 74 of the lower outer 14 is then interlocked with (fitted together with) the protrusion portion 44 of the inner panel 16 as shown in Fig. 9. The lower outer 14 is thereby positioned in the vehicle width direction with respect to the inner panel 16. The lower outer 14 and the inner panel 16 are joined together in this state by the adhesive 80 by pushing the join portions of the lower outer 14 onto the join portions of the inner panel 16. Vehicle width direction variation of the lower outer 14 with respect to the inner panel 16 can accordingly be reduced.

Note that the bracket 50 is in a pre-attached state to the inner panel 16 when joining of the inner panel 16 and the lower outer 14 with the adhesive 80 is performed.

As shown in Fig. 6 and Fig. 11, the protrusion portion 44 of the inner panel 16 and the hole portion 74 of the lower outer 14 are positioned in the vicinity of the lowermost portion of the loop pattern of the adhesive 80 (seal line). The hole portion 74 of the lower outer 14 is configured as an elongated hole that is longer in the vehicle up-down direction. The gap S is present in the vehicle up-down direction between the protrusion portion 44 and the hole portion 74 in an interlocked state of the hole portion 74 of the lower outer 14 and the protrusion portion 44 of the inner panel 16 (see Fig. 9). Accordingly, as shown in Fig. 11, any water that has penetrated between the lower outer 14 and the inner panel 16 through the opening portion 35 and the opening portions 36 of the lower outer 14 flows in the vehicle downwards direction as indicated by arrow A, and is expelled to the vehicle exterior through the vehicle up-down direction gap S between the protrusion portion 44 and the hole portion 74 (in particular the gap S at the lower side of the protrusion portion 44) as indicated by arrow B. The water expulsion path for any water that has penetrated between the lower outer 14 and the inner panel 16 is accordingly also the path through which any water between the protrusion portion 44 and the hole portion 74 is expelled through the gap S. Water staining can be suppressed from remaining irregularly since such water is expelled through the same portion.

As shown in Fig. 10, the projection portion 46 is provided to the inner panel 16, and the opening portion 62 is provided to the bracket 50 in order to perform positioning between the inner panel 16 and the bracket 50 provided with the weld nuts 56 that retain the license plate 32 and the attachment holes 54 for the lamps 40. When attaching the bracket 50 to the inner panel 16, the opening portion 62 of the bracket 50 is engaged with (fitted together with) the projection portion 46 of the inner panel 16 from the vehicle outside. Namely, an edge portion of the opening portion 62 of the bracket 50 is made to contact the upper peripheral face of the projection portion 46 of the inner panel 16, thereby positioning the bracket 50 in the vehicle width direction and the vehicle up-down direction with respect to the inner panel 16. In this state, nuts are screwed onto the stud bolts 58 of the bracket 50 from the vehicle inside of the inner panel 16, thereby fixing the upper wall portion 50A of the bracket 50 to the inner panel 16. Moreover, a fastener (not shown in the drawings) is passed through the bolt through hole 60 of the bracket 50 and fastened and fixed to the inner panel 16, thereby fixing the lower wall portion 50B of the bracket 50 to the inner panel 16. Misalignment in the relative positions of the license plate 32, retained by the weld nuts 56 of the bracket 50, and the lamps 40, attached to the attachment holes 54 of the bracket 50, can accordingly be reduced.

The projection portion 46 of the inner panel 16 is formed in the vicinity of the protrusion portion 44. The bracket 50 is positioned in the vehicle width direction and the vehicle up-down direction by the projection portion 46, and the lower outer 14 is positioned in the vehicle width direction by the protrusion portion 44. Note that in the present exemplary embodiment, the projection portion 46 and the protrusion portion 44 are provided as separate profiles on the inner panel 16, however there is no limitation thereto, and integrated protrusion portions may be provided.

Variation in the positions of each component can be reduced since all of the components at the periphery of the license plate 32 are positioned with respect to the protrusion portion 44 and the projection portion 46 of the inner panel 16.

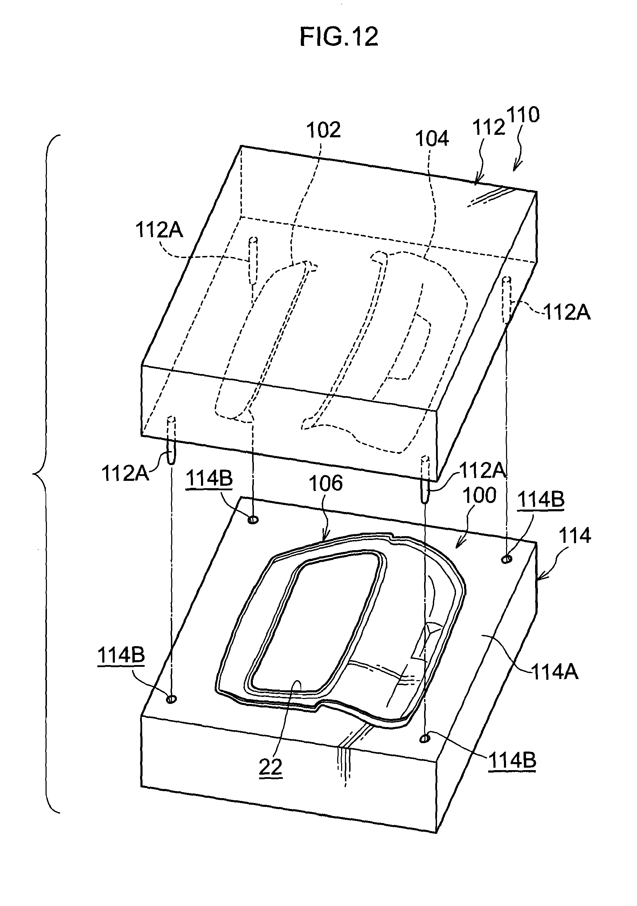

Fig. 12 shows a positioning process during adhesion of an upper outer 102 and a lower outer 104 to an inner panel 106 of a back door 100 of a comparative example.

As shown in Fig. 12, an apparatus 110 is provided with a first jig 112 that holds the upper outer 102 and the outer lower 104, and a second jig 114 that holds the inner panel 106. Plural (four in the present comparative example) pins 112A project out from the face of the first jig 112 where the upper outer 102 and the outer lower 104 are held, and holes 114B into which the pins 112A are inserted are formed in a face 114A of the second jig 114 where the inner panel 106 is held. In the apparatus 110, positioning of the upper outer 102 and the outer lower 104 with respect to the inner panel 106 is performed by inserting the pins 112A of the first jig 112 into the holes 114B of the second jig 114.

In such a configuration, variation is present respectively between the first jig 112 and the upper outer 102 and the outer lower 104, between the second jig 114 and the inner panel 106, and between the first jig 112 and the second jig 114. The cumulative variation gives rise to misalignment between the relative positions of the upper outer 102 and outer lower 104 and the inner panel 106. Accordingly, when the inner panel 106 and the upper outer 102 and the outer lower 104 are joined together by an adhesive when employing the apparatus 110, this leads to the possibility of gaps and height differences occurring between the back door 100 and a side outer member 28 of a main body 26 (see Fig. 3) due to misalignment of the adhesion positions of the inner panel 106 and the upper outer 102 and outer lower 104, resulting in an unsightly appearance.

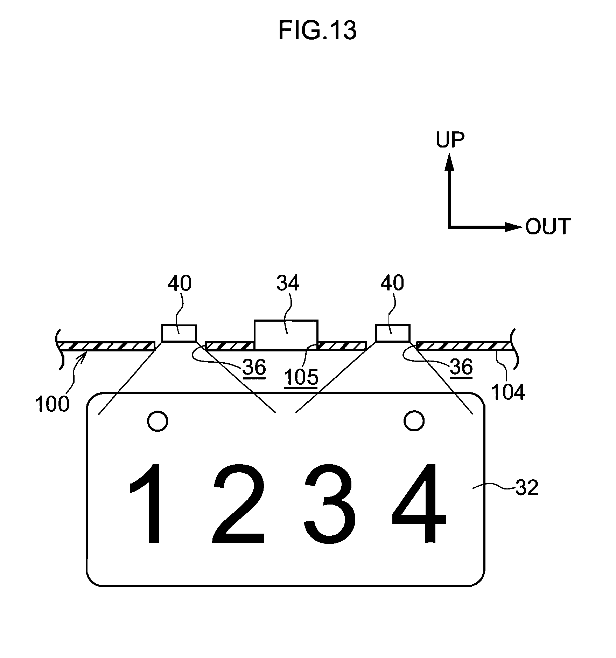

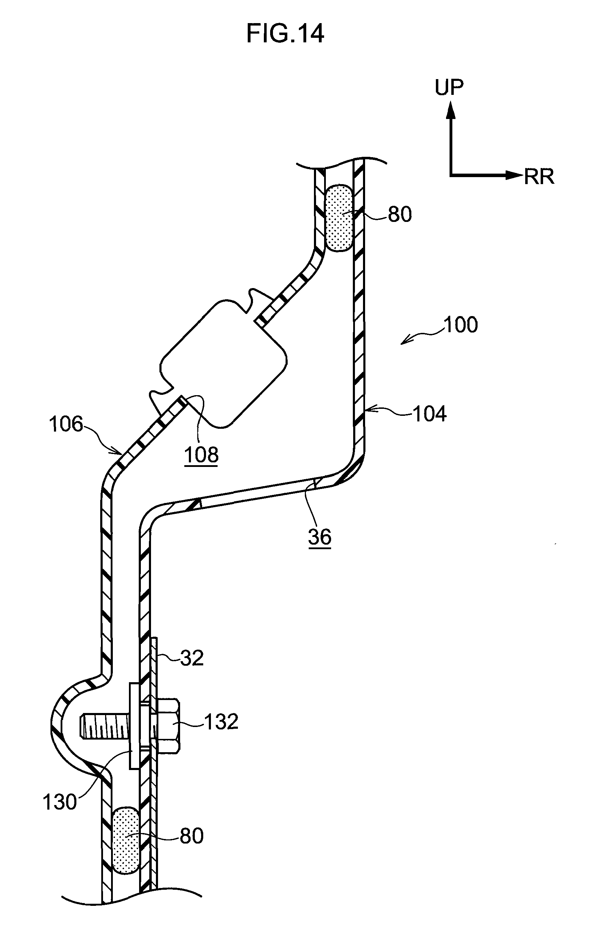

As shown in Fig. 14, in the back door 100 of the comparative example, lamps 40 are attached to lamp attachment holes 108 formed in the inner panel 106. Opening portions 36 in the outer lower 104 are disposed to the lower side of the lamps 40. As shown in Fig. 14, a license plate 32 is attached to the outer lower 104 by screwing bolts 132 from both vehicle width direction sides of the outer lower 104 into a bracket 130 provided with metal nuts. Moreover, as shown in Fig. 13, in the back door 100 of the comparative example, a handle switch 34 is attached to a handle attachment hole 105 formed in the outer lower 104.

There is accordingly a possibility that variation in the relative positions of the license plate 32, the opening portions 36 formed in the outer lower 104, and the lamps 40 attached to the inner panel 106 becomes large. As shown in Fig. 13, it is not possible to illuminate specific positions on the license plate 32 with a specific light intensity when there is variation in the positions of the opening portions 36 of the outer lower 104 and the lamps 40 of the inner panel 106. It is therefore necessary to for example increase the size of the opening portions 36 or dispose the lamps 40 further from the license plate 32 in order to secure the required illumination light intensity for the license plate 32. Moreover, increasing the distance between the lamps 40 and the license plate 32 imposes a limitation on design.

Moreover, as shown in Fig. 14, when any water that has penetrated to the periphery of the lamps 40 through the opening portions 36, for example when washing the vehicle, is expelled to the vehicle exterior, there is the possibility of leaving irregular water stains that give an unsightly appearance. Namely, when water penetrates through the opening portions 36, there is a chance of the water that has entered between the outer lower 104 and the inner panel 106 overflowing to the vehicle exterior through the opening portions 36 through which it entered due to sealing by the adhesive 80 that is disposed in a loop pattern as viewed from the rear of the vehicle. When this occurs, there is the possibility of irregular water stains remaining due to the irregular flow of water from various locations.

By contrast, in the back door 10 of the present exemplary embodiment, variation can be reduced in comparison to cases in which the inner panel and the lower outer and upper outer are set against each other using the first jig 112 and the second jig 114, since the lower outer 14 is positioned in the vehicle width direction by the protrusion portion 44 of the inner panel 16 and the hole portion 74 of the lower outer 14. Misalignment between the relative positions of the license plate 32 attached to the bracket 50 and the lamps 40 can also be reduced since the bracket 50 is positioned in the vehicle width direction and the vehicle up-down direction by the projection portion 46 of the inner panel 16 and the opening portion 62 of the bracket 50.

Moreover, the hole portion 74 of the lower outer 14 provided at the lowermost portion of the seal line created by the adhesive 80 is an elongated hole that is longer in the up-down direction, and water is expelled through the up-down direction gap S between the hole portion 74 and the protrusion portion 44. Thus any water that has penetrated between the lower outer 14 and the inner panel 16 through the opening portions 36, flows towards the lower side as indicated by arrow A and arrow B, and is expelled through the gap S between the hole portion 74 and the protrusion portion 44. Water can accordingly be suppressed from flowing irregularly, and an unsightly appearance due to irregular water stains can be suppressed from occurring.

Note that in the present exemplary embodiment, the shapes of the protrusion portion 44 of the inner panel 16 and the hole portion 74 of the lower outer 14 may be configured by other shapes that enable vehicle width direction positioning of the lower outer 14 with respect to the inner panel 16 to be performed.

Vehicle width direction and vehicle up-down direction positioning of the lower outer 14 with respect to the inner panel 16 may also be performed by interlocking a protrusion portion and a hole portion without providing the up-down direction gap S between the protrusion portion of the inner panel 16 and the hole portion of the lower outer 14. In such cases, a separate water drainage hole is preferably provided to the lower outer 14 in order to expel water that has penetrated between the lower outer 14 and the inner panel 16.

A protrusion portion may also be provided to the inner panel 16 and a hole portion that interlocks with the protrusion portion provided to the upper outer 12 for positioning of the inner panel 16 against the upper outer 12. So doing enables the upper outer 12 to be positioned in the vehicle width direction and the vehicle up-down direction with respect to the inner panel 16.

In the present exemplary embodiment, positioning is performed by engaging the projection portion 46 of the inner panel 16 with the opening portion 62 of the bracket 50, however there is no limitation thereto and configuration may be made whereby an engagement portion such as an opening portion, a hole portion or a recess portion is provided to the inner panel, an engaged-with portion such as a projection portion is provided to the bracket, and the two engaged with each other.

Moreover, although the present exemplary embodiment employs the back door 10 wherein the outer panel configured by the upper outer and the lower outer, and the inner panel 16 are both formed from resin, there is no limitation thereto and configuration may be made wherein only the inner panel 16 is made from resin.

In the present exemplary embodiment, the present invention is applied to the resin back door as an example of a resin vehicle door structure, however there is no limitation to resin back doors, and the present invention may also be applied to other resin vehicle doors, for example to a resin side door.

## Claims

1. A resin vehicle door structure comprising:
an outer panel (12, 14) that is disposed to a vehicle compartment outer side of a vehicle door (10);
an inner panel (16) that is made from resin, disposed to a vehicle compartment inner side of the outer panel (12, 14), and joined to the outer panel by an adhesive (80);
**characterized by** further comprising:
a protrusion portion (44) that is provided to the inner panel (16) and protrudes towards the vehicle compartment outer side; and
a hole portion (74) that is provided to the outer panel (12, 14) and that positions the outer panel (12, 14) in a vehicle door width direction with respect to the inner panel (16) by interlocking with the protrusion portion (44), wherein
the hole portion (74) is an elongated hole formed longer along a vehicle up-down direction; and
a gap (S) is formed between the hole portion (74) and the protrusion portion (44) at least at an up-down direction lower side of the protrusion portion (44), in an interlocked state of the hole portion (74) and the protrusion portion (44).

2. The resin vehicle door structure of claim 1, further comprising a bracket (50) that is attached to the inner panel (16) between the inner panel (16) and the outer panel (12, 14), wherein the bracket (50) includes:
a nut (56) that retains a license plate (32); and
an attachment hole (54) that attaches a lamp (40) illuminating the license plate (32).

3. The resin vehicle door structure of claim 2, further comprising:
an engaged-with portion (46) that is provided to the inner panel (16); and
an engagement portion (62) that is provided to the bracket (50) and that engages with and is positioned by the engaged-with portion (46), wherein the engagement portion (62) positions the bracket (50) in a vehicle width direction and a vehicle up-down direction with respect to the inner panel (16) by engagement with the engaged-with portion (46).

4. The resin vehicle door structure of any one of claim 1 to claim 3, wherein the protrusion portion (44) and the hole portion (74) are positioned at a lower side of the door (10), at a lowermost portion of an upper side of a seal line where the outer panel (12, 14) and the inner panel (16) are joined together by the adhesive (80).

## Patentansprüche

1. Fahrzeugtürstruktur aus Harz, aufweisend:
ein äußeres Paneel (12, 14), das an einer Fahrgastzellenaußenseite einer Fahrzeugtür (10) angeordnet ist;
ein inneres Paneel (16), das aus Harz besteht und an einer Fahrgastzelleninnenseite des äußeren Paneels (12, 14) angeordnet ist und durch einen Klebstoff (80) mit dem äußeren Paneel verbunden ist;
**dadurch gekennzeichnet, dass** es ferner Folgendes aufweist:
einen Vorsprungabschnitt (44), der sich an dem inneren Paneel (16) befindet und in Richtung der Fahrgastzellenaußenseite ragt; und
einen Lochabschnitt (74), der sich an dem äußeren Paneel (12, 14) befindet und der das äußere Paneel (12, 14) in einer Fahrzeugtürbreitenrichtung im Verhältnis zu dem inneren Paneel (16) positioniert, indem er mit dem Vorsprungabschnitt (44) ineinandergreift, wobei
der Lochabschnitt (74) ein verlängertes Loch ist, das entlang einer Oben-Unten-Richtung des Fahrzeugs länger ausgebildet ist; und
in einem ineinandergreifenden Zustand des Lochabschnitts (74) und des Vorsprungabschnitts (44) eine Lücke (S) zwischen dem Lochabschnitt (74) und dem Vorsprungabschnitt (44) zumindest an einer zu der Oben-Unten-Richtung unteren Seite des Vorsprungabschnitts (44) ausgebildet ist.

2. Fahrzeugtürstruktur aus Harz nach Anspruch 1, ferner aufweisend eine Klammer (50), die an dem inneren Paneel (16) zwischen dem inneren Paneel (16) und dem äußeren Paneel (12, 14) befestigt ist, wobei die Klammer (50) Folgendes beinhaltet:
eine Mutter (56), die ein Nummernschild (32) hält; und
ein Befestigungsloch (54), das eine Lampe (40) hält, die das Nummernschild (32) beleuchtet.

3. Fahrzeugtürstruktur aus Harz nach Anspruch 2, ferner aufweisend:
einen eingreifenden Abschnitt (46), der sich an dem inneren Paneel (16) befindet; und einen Eingriffsabschnitt (62), der sich an der Klammer (50) befindet und der mit dem eingreifenden Abschnitt (46) ineinandergreift und von diesem positioniert wird, wobei der Eingriffsabschnitt (62) die Klammer (50) in einer Fahrzeugbreitenrichtung und einer Oben-Unten-Richtung des Fahrzeugs im Verhältnis zu dem inneren Paneel (16) durch Ineinandergreifen mit dem eingreifenden Abschnitt (46) positioniert.

4. Fahrzeugtürstruktur aus Harz nach einem der Ansprüche 1 bis 3, wobei der Vorsprungabschnitt (44) und der Lochabschnitt (74) an einer unteren Seite der Tür (10), an einem untersten Abschnitt einer oberen Seite einer Versiegelungslinie positioniert sind, wo das äußere Paneel (12, 14) und das innere Paneel (16) durch den Klebstoff (80) zusammengefügt werden.

## Revendications

1. Structure de porte de véhicule en résine comprenant :
un panneau extérieur (12, 14) qui est disposé sur un côté extérieur d'habitacle de véhicule d'une porte de véhicule (10) ;
un panneau intérieur (16) qui est fait de résine, disposé sur un côté intérieur d'habitacle de véhicule du panneau extérieur (12, 14), et joint au panneau extérieur par un adhésif (80) ;
**caractérisée en ce qu'**elle comprend en outre ;
une partie de saillie (44) qui est placée sur le panneau intérieur (16) et fait saillie vers le côté extérieur d'habitacle de véhicule ; et
une partie de trou (74) qui est placée sur le panneau extérieur (12, 14) et qui positionne le panneau extérieur (12, 14) dans une direction de largeur de la porte de véhicule par rapport au panneau intérieur (16) par verrouillage avec la partie de saillie (44), dans laquelle
la partie de trou (74) est un trou allongé formé plus long le long d'une direction haut-bas du véhicule ; et
un espace (S) est formé entre la partie de trou (74) et la partie de saillie (44) au moins au niveau d'un côté inférieur dans la direction haut-bas de la partie de saillie (44), dans un état verrouillé de la partie de trou (74) et de la partie de saillie (44).

2. Structure de porte de véhicule en résine selon la revendication 1, comprenant en outre un support (50) qui est fixé sur le panneau intérieur (16) entre le panneau intérieur (16) et le panneau extérieur (12, 14), dans laquelle le support (50) inclut :
un écrou (56) qui retient une plaque d'immatriculation (32) ; et
un trou de fixation (54) qui fixe une lampe (40) éclairant la plaque d'immatriculation (32).

3. Structure de porte de véhicule en résine selon la revendication 2, comprenant en outre :
une partie en prise (46) qui est placée sur le panneau intérieur (16) ; et
une partie de prise (62) qui est placée sur le support (50) et qui vient en prise avec et est positionnée par la partie en prise (46), dans lequel la partie de prise (62) positionne le support (50) dans le sens de la largeur du véhicule et une direction haut-bas du véhicule par rapport au panneau intérieur (16) par prise ave la partie en prise (46).

4. Structure de porte de véhicule en résine selon l'une quelconque des revendications 1 à 3, dans laquelle la partie de saillie (44) et la partie de trou (74) sont positionnées en un côté inférieur de la porte (10), en une partie la plus basse d'un côté supérieur d'une ligne de joint où le panneau extérieur (12, 14) et le panneau intérieur (16) sont joint ensemble par l'adhésif (80).
